# EUROPEAN PATENT APPLICATION

(11) **EP 0 890 700 A2**
(43) Date of publication of application: **13.01.1999**
(21) Application number: 98610021.2
(22) Date of filing: 09.07.1998
(51) Int. Cl.: E06B 3/98

(54) **Combination of frame profile members and assembling devices for mitrejoints between such profile members**

(30) Priority: 11.07.1997 DK 84997
(71) Applicant: VELUX Industri A/S, 2860 Soborg (DK)
(72) Inventor: Thomsen, Morten Werner, 4000 Roskilde (DK); Frederiksen, Per, 3650 Olstykke (DK); Pedersen, Hans Ove, 3500 Vaerlose (DK); Helmersen, Lars, 4040 Jyllinge (DK); Wind, Aage, 3540 Lynge (DK)
(74) Representative: Raffnsöe, Knud Rosenstand

(57) **Abstract**

Profiled rail members (9, 10) with substantially uniform profile cross-sections, preferably for use in framework structures, comprise at least one interior wall (2) with a front side and a rear side, in the latter of which longitudinal grooves (6, 7) are provided, said grooves being defined laterally by upwards projecting wall and flange members (3, 4, 5), and are be joined in a mitre joint (26) by means of an assembling device comprising two fitting parts (19, 20) designed for substantially symmetrical arrangedement around the mitre joint (26) and having openings for an assembling joint (27, 28) for assembling the two fitting parts.

The profiled rail members (9, 10) and the fitting parts (19, 20) are provided with co-operating means (4a, 5a, 21, 24a) in order to cause, during said assembly, a simultaneous tightening of the frame profile members into mutually realigned positions towards the mitre joint (18, 26).

## Description

The present invention relates to a combination of profiled rail members with substantially uniform profile cross-sections, preferably for use in framework structures, and comprising at least one interior wall with a front side and a rear side, in the latter of which a longitudinal groove is formed, said groove being defined laterally by projecting wall or flange members, and an assembling device for providing mitre joints between such rail members, said assembling device comprising two assembling fitting parts with insert members for substantially symmetrical arrangement in said groove around the mitre joint and having openings for an assembling joint for tight assembling the two fitting parts.

Various embodiments of assembling devices of this type are known for use in connection with 45° mitre joints.

From DE-A-29 43 593 and DE-A-30 35 361 assembling devices are known in the shape of angle members, with which profiled rail or frame members are connected by means of anchoring members penetrating outer walls of the profiled rail or frame members.

EP-A-0 687 783 discloses an assembling device for two mutually perpendicular parts of a window main frame, in which special fittings are mounted in the frame members, said fittings having oblique bores for a bolt connection extending at right angles to the mitre joint.

WO 95/20093 discloses a special assembling device for 45° mitre joints between frame profile members, said assembling device consisting of to hingedly connected quarter-circular sectors for mounting in the corner joint with a view to connecting the frame profile members such that they extend in mutually oblique planes.

In respect of mitre joints with a mitre angle different from 45° for providing an obtuse-angled corner assembly between two frame profile members a special assembling device is known from DE-A-29 25 700, said device comprising a deformable member connected with anchoring members, which are each positioned in each of the respective two frame profile members.

For the same purpose a special centring and load-transferring insert guide member is known from EP-A-0 783 061 for use together with conventional assembling devices in the form of screws, bolt connections between yokes placed at the outer side, gluing or welding.

The majority of these known assembling devices suffer from the drawback that in order to provide an accurate assembly a very exact fixing of the frame profile members in a fixture is required, and that, in spite of this, it may be difficult to bring the frame profile members in mutual alignment in a plane perpendicular to the cutting face of the mitre joint.

The need for fixing in a fixture furthermore has the effect that joinings made by means of conventional assembling joints can only be disassembled and assembled accurately with difficulty, for instance in connection with exchange of a single frame profile member in an assembled sash structure.

Assembly fittings of the type mentioned by way of introduction, in which it has been attempted to solve the above-mentioned problems by a more exact fixing of fitting members in the grooves of the frame profile members are known from SE-B- 318.986 and FR-B-1.460.453.

On this background it is the object of the invention to provide a combination of the type mentioned which through a simple and comparatively cheap manufacture of frame profile members and assembling devices, apart from quickly providing an accurate mitre joint with mutual alignment of the two profiled rail members, makes it possible by means of one and the same profile cross section to provide corner joints within a big angular range from slightly acute-angled to strongly obtuse-angled joints.

To meet this object the combination according to the invention is characterized in that the profiled rail members are formed with a first and a second groove for accommodating a first assembling device, in which said assembling joint extends in the plane of the mitre joint, for use in right-angled or slightly acute-angled corner joints, and a second assembling device, in which said assembling joint extends substantially at right angles to the plane of the mitre joint, for use in obtuse-angled corner joints, respectively, and the fitting parts are provided with co-operating means in order to cause, during said assembly, a simultaneous tightening of the frame profile members into mutually realigned position towards the mitre joint.

In respect of each assembling device the mounting of the two fitting parts in each of the two profiled rail members, which are to be joined by a mitre joint, without the need for fixing in a fixture, is quick and simple, and at the tightening of the fitting parts an exact positioning of the profiled rail members in mutually aligned positions is ensured.

In respect of framework structures composed of a number of mutually connected profiled rail members the invention enables a quicker mounting by providing several mitre joints at a time, and it is furthermore comparatively easy to disassemble a mitre joint, for instance with a view to exchanging a profile member, and then subsequently to re-establish the joint with the same accuracy.

In an embodiment of said first assembling device for right-anled and slightly acute-angled corner joints, in which the mitre angle measured as the angle between the cutting face at the mitre joint and a cutting plane in the longitudinal direction of a profile memer is at the most 45°, the two fitting parts of the first assembling device are formed as angle fittings, of which a first fitting part has two legs with a profile cross-section designed for formfit accomodation in said first groove, said legs forming a mutual angle corresponding to twice the angle of the mitre, whereas the second fitting part is designed with abutment surfaces mutually angled by the double mitre angle for fixed positioning outside said groove in abutment against one of said upwards projecting wall or flange members.

In an embodiment of said second assembling device for obtuse-angled corner joints, in which the mitre angle is bigger than 45°, the two fitting parts of the second assembling device may comprise substantially uniform fittings parts designed for formfit locking and fixing in said second groove of each of the respective rail members.

The invention will now be explained in the following with reference to the schematic drawing, in which
Figs 1 and 2 are a plane view and a sectional view of a first embodiment of the combination according to the invention, and
Figs 3 and 4 are similar views of a second embodiment.

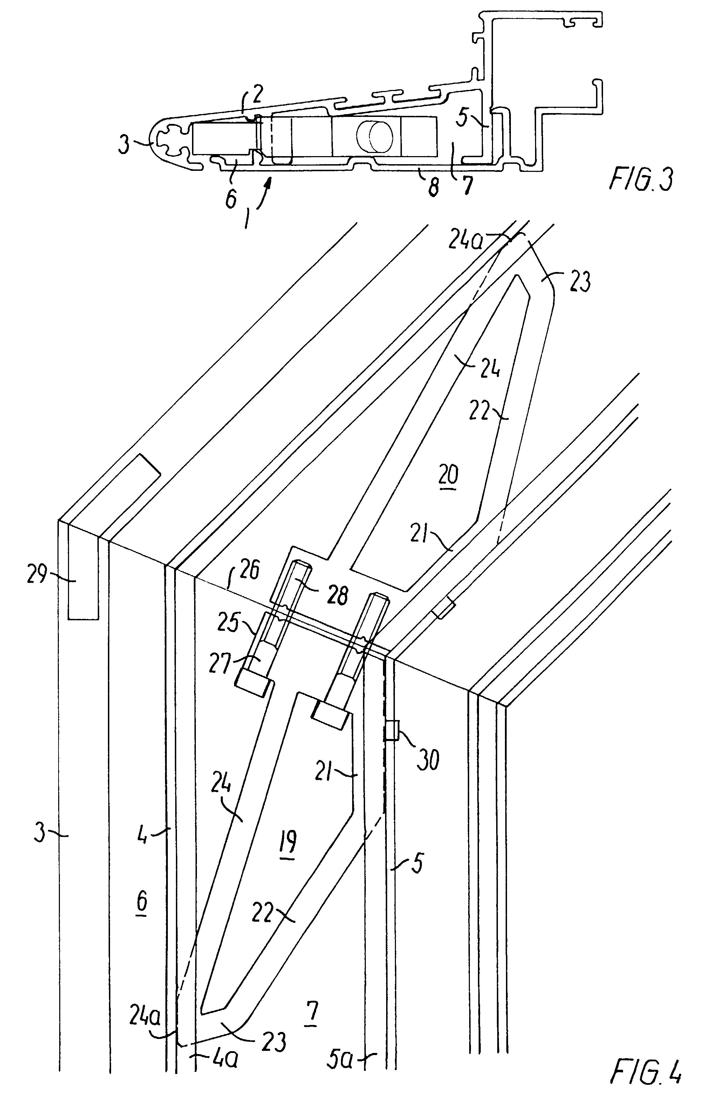

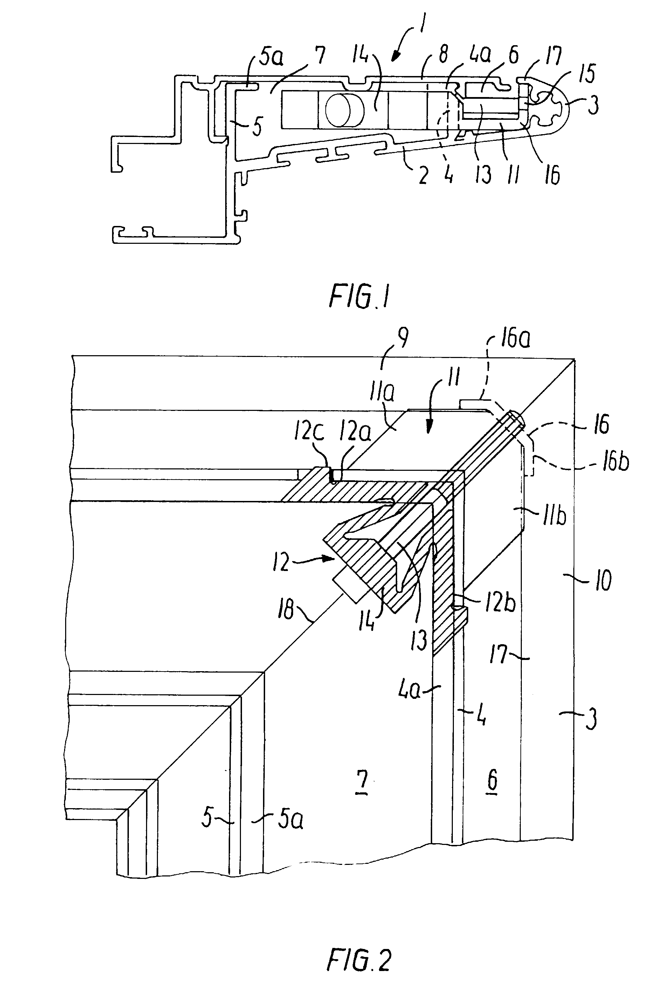

The profiled rail member 1 shown in Fig. 1 comprises an interior wall 2 with a bent front edge 3 and two wall flange members 4 and 5 projecting from the rear side of the wall and having substantially L-shaped cross-section, which members define two grooves 6 and 7 extending in the longitudinal direction of the profiled rail member. The exterior wall 2 of the profiled rail member 1 is covered at the back by a cover plate 8 which together with the interior wall 2 forms a hollow profile.

Fig. 2 shows a 45° mitre joining of two rail members 9 and 10 having the cross sectional profile shown in Fig. 1 by means of an assembling device according to the invention with two fitting parts, which in the embodiment shown have the shape of angular fittings, of which a first fitting part 11 has two mutually right-angled legs 11a and 11b which, as shown in Fig. 1, may have the shape of flat rail members with a width fitting the groove 6 such that the legs 11a and 11b of the fitting member 11 can each be positively locked formfit in the groove 6 in the rail members 9 and 10, respectively.

A second fitting part is designed as a fitting part 12 having abutment surfaces 12a and 12b which are perpendicular to each other for abutment against the upwards projecting wall or flange member 5 outside the groove 6, to which the fitting part 12 is fixed by pins 12c for engagement with holes in the wall or flange member 4.

The assembling joint between the fitting parts 11 and 12 is made as a screw/nut connection extending in the plane of the mitre joint with a screw 3, which has been passed through a middle portion 14 of the second fitting part 12 for screwing into a nut bore 15 provided in a wall portion 16 of the fitting 11 perpendicular to the mitre joint.

As will be seen from the figures, the wall portion 16 is provided with two projecting flap members 16a and 16b, which, when the fitting 11 is placed with the legs 11a and 11b in the grooves 6 in the two rail members 9 and 10, are positioned below the inwardly bent edge portion 17 formed below the bent front edge 3 at the opening of the groove 6, whereas the legs of the second fitting part 12 are placed below the inwardly bent edge portion 4a of the wall or flange member 4.

In this way the profile members 9 and 10 are positioned in exact mutual alignment, when they, at the tightening of the screw-nut connection 14, 15, are drawn against each other for mutual abutment of their respective mitre cutting faces 18.

An assembling device with angular fittings as shown in Figs 1 and 2 is not confined to use in a 45° mitre joint, but is also well suited for for instance slightly acute-angled corner joints, in which the mitre angle is less than 45°, for instance 40°, the fitting members 11 and 12 being then modified such that the angle between the legs 11a and 11b and the angle between the abutment surfaces 12 and 12b of the fitting member 12 becomes equal to the double mitre angle, i.e. for instance 80°.

In the embodiment shown in Figs 3 and 4 with an obtuse-angled corner joint profiled rail members 9 and 10 have been used, said members having the same cross sectional profiles as in Figs 1 and 2, and in respect of details concerning the rail members the same reference numerals as in these figures have been used.

In this example, the assembling device is manufactured with fitting parts in the form of two substantially similar fittings 19 and 20, each having a substantially polygonal, for instance a substantially pentagonal form with side members 21 - 24 and a wall portion 25 substantially in parallel with the plane 26 of the mitre joint. The assembling joint may here comprise two screw-nut connections substantially perpendicular to the plane 26 of the mitre joint and each comprising a screw 27 passed through a bore in the wall portion 25 of one of the fittings 19 for screwing into a threaded bore 28 in the wall portion 25 of the second fitting 20.

As will be seen, the fitting parts 19 and 20 are designed to be positively locked in the grooves 7 of each of the profile members 9 and 10, such that two opposite wall portions, which in the embodiment shown are formed by the side members 21 and a bevelled end portion 24a of the side member 24, are positioned below inwardly bent edge portions 4a and 5a of the wall or flange portions 4 and 5 at the opening of the groove 7 in each of the profile members 9 and 10. The fitting parts 19 and 20 are fixed in the grooves 7 for engagement between taps 30 and recesses or holes in the wall or flange members 5.

The assembling device shown in Figs 3 and 4 is particularly suited for obtuse-angled corner joints within a broad interval of mitre angles above 45°, the geometry being determined thereby that the angle between the wall portion 25 for the screw-nut connection 27 - 28 and the adjacent side member 21 in each of the fitting partsl 19 and 20 is equal to 180° minus the actual mitre angle.

The number of screw-nut connections 27 - 28 may be varied according to the dimensions of the profile members, and in case of comparatively big profiles an additional steering angle hinge 29 may, if necessary, be inserted in the profile members positioned farthest out in the obtuse-angled corner joint.

The invention is not confined to the embodiment of the profile members shown, but may also be used in connection with profile members having an arbitrary cross sectional profile, in which a groove is provided at the backside, which groove is defined by upwards projecting wall or flange members and at the opening of which inwardly bent edge portions are provided, which co-operate with parts of the fitting members of the assembling device, such that the profile members are brought into mutual alignment, when they, when the assembling connection is tightened, are pulled towards each other in the plane of the mitre joint.

## Claims

1. A combination of profiled rail members (1; 9, 10) with substantially uniform profile cross-sections, preferably for use in framework structures, and comprising at least one interior wall (2) with a front side and a rear side, in the latter of which a longitudinal groove (6, 7) is formed, said groove being defined laterally by projecting wall or flange members (3, 4, 5), and an assembling device for providing mitre joints between such profiled rail members, said assembling device comprising two assembling fitting parts (11, 12; 19, 20) with insert members for substantially symmetrical arrangement in said groove around the mitre joint (18,26) and having openings for an assembling joint for tight assembling the two fitting parts (11, 12; 19, 20), **characterized** in that the profiled rail members are formed with a first and a second groove (6, 7) for accommodating a first assembling device (11, 12), in which said assembling joint extends in the plane of the mitre joint, for use in right-angled or slightly acute-angled corner joints, and a second assembling device (19, 20), in which said assembling joint extends substantially at right angles to the plane of the mitre joint, for use in obtuse-angled corner joints, respectively, and the fitting parts are provided with co-operating means in order to cause, during said assembly, a simultaneous tightening of the frame profile members into mutually realigned position towards the mitre joint (18, 26).

2. The combination according to claim 1, **characterized** in that the two fitting parts of the first assembling device are formed as angle fittings (11, 12), of which a first fitting part (11) has two legs (11a, 11b) with a profile cross-section designed for formfit accomodation in said first groove (6), said legs forming a mutual angle corresponding to twice the angle of the mitre, whereas the second fitting part (12) is designed with abutment surfaces (12a, 12b) mutually angled by the double mitre angle for fixed positioning outside said groove 86) in abutment against one of said upwards projecting wall or flange members (4).

3. The combination according to claim 2, **characterized** in that the assembling joint comprises a screw or a bolt (13) passed through a hole in a wall section (14) of said second fitting part (12) perpendicular to the mitre joint (18) for engagement with a nut (15) resting against a wall portion (16) of said first fitting part (11) at right angles to the mitre joint (18).

4. The combination according to claim 2 or 3, **characterized** in that said co-operating means comprise inwardly bent edge portions (4a, 17) of said projecting wall or flange members (3, 7) at the opening of the longitudinal groove (6) in each frame profile member (9,10) and outwardly protruding flap members (16a, 16b) in connection with said wall portion (16) of the first fitting part (11) at right angles to the mitre joint (18), said flap members (16a, 16b) being, when the legs of the first fitting part (11) are accommodated in the groove (6) of each frame profile, placed below one (17) of said edge portions, whereas the legs of said second fitting part (12) with said abutment surfaces (12a, 12b) are placed below the other inwardly bent edge portion (4a).

5. The combination according to claim 1, **characterized** in that the two fitting parts of the second assembling device comprise substantially uniform fitting parts (19, 20) designed for formfit locking and fixing in said second groove (7) of each respective frame profile members (9, 10).

6. The combination according to claim 5, **characterized** in that the assembling joint comprises at least one screw or bolt (27), which is passed through a wall portion (25) of one of the fitting parts (19) substantially in parallel with the mitre joint (26) for engagement with a nut (28) resting against a wall portion (25) of the second fitting part (20) substantially in parallel with the mitre joint (26).

7. The combination according to claim 5 or 6, **characterized** in that said co-operating means comprise inwardly bent edge portions (4a, 5a) of said projecting wall or flange members (4, 5) at the opening of the groove (7) and the manufacture of said curved fittings (19, 20) with a substantially polygonal shape having two opposite wall portions (21, 24a), which, when the fitting is accommodated in one of said grooves (7), are positioned below the inwardly bent edge portions (4a, 5a) of said projecting wall or flange members (4, 5).
